# EUROPÄISCHE PATENTANMELDUNG

(11) **EP 1 041 059 A2**
(43) Veröffentlichungstag der Anmeldung: **04.10.2000**
(21) Anmeldenummer: 00104888.3
(22) Anmeldetag: 08.03.2000
(51) Int. Cl.: C05F 9/04, C05F 17/02

(54) **Thermokomposter für organische Abfälle**

(30) Priorität: 30.03.1999 DE 29905839 U
(71) Anmelder: REMAPLAN GmbH Planung und Management für Kunststoff-Recycling, 82008 Unterhaching (DE)
(72) Erfinder: Kaiser, Hans, 81829 München (DE); Rüttnauer, Rochus C., 94405 Landau (DE)
(74) Vertreter: Patentanwälte Dr. Solf & Zapf

(57) **Zusammenfassung**

Die Erfindung betrifft einen Thermokomposter für organische Abfälle, insbesondere für Küchen- und Gartenabfälle, aufweisend einen über eine freie Grundfläche angeordneten Mantel aus mindestens drei Seitenteilen, die über vertikalrandseitige Verbindungselemente miteinander verbunden sind, wobei die Einfüllöffnung des Mantels mit einem Deckel abdeckbar ist und wobei die Seitenteile (3,4,5,6) mit vertikal beidrandseitigen, nach innen gerichteten Übergangsrandabschnitten (20; 21, 63) sowie gleichartig ausgebildet sind, wobei an den Übergangsrandabschnitten (20;21,63) die Verbindungselemente (22,24,23) derart vertikal korrespondierend angeordnet sind, daß die Seitenteile (3,4,5,6) über lösbare Verbindungselementeingriffe (22,24,23;16,17,18,19) schwenkbar miteinander verbunden sind.

## Beschreibung

Die Erfindung betrifft einen Thermokomposter für organische Abfälle, insbesondere für Küchen- und Gartenabfälle, der einen über eine freie Grundfläche angeordneten Mantel aus mindestens drei Seitenteilen aufweist, die über vertikalrandseitige Verbindungselemente miteinander verbunden sind, wobei die Einfüllöffnung des Mantels mit einem Deckel abdeckbar ist.

Derartige aus Kunststoff bestehende Thermokomposter sind bekannt. Allen bekannten Thermokompostern ist gemeinsam, daß ein alleiniger Transport des Mantels und des daran schwenkbar gehalterten Deckels sehr aufwendig und mühevoll ist. Ebenso ist ein stabiler Deckel bei Thermokompostern größerer Literzahl (400 bis 600 l) unter Mühen zu bewegen und behindert oft die Eingabe von Abfällen.

Der Erfindung liegt deshalb die Aufgabe zugrunde, einen Thermokomposter anzugeben, der derart geeignet ausgebildet ist, daß seine Bestandteile einfach transportierbar und leicht zusammensetzbar sind. Desweiteren soll eine verbesserte Deckelausbildung einerseits die Betätigung erleichtern und andererseits im geschlossenen Zustand die Stabilität des Thermokomposters gewährleisten.

Die Aufgabe wird durch die Merkmale des Schutzanspruchs 1 gelöst. In dem Thermokomposter sind gemäß dem Oberbegriff des Anspruchs 1 die Seitenteile mit vertikal beidrandseitigen, nach innen gerichteten Übergangsrandabschnitten sowie gleichartig ausgebildet, wobei an den Übergangsrandabschnitten die Verbindungselemente derart vertikal korrespondierend angeordnet sind, daß die Seitenteile über lösbare Verbindungselementeeingriffe schwenkbar miteinander verbunden sind.

Die jeweils Verbindungselemente aufweisenden Übergangsrandsabschnitte benachbarter Seitenteile bilden im Verbund Stützseitenteile aus, die bei vorzugsweise vier gleichartigen Seitenteilen jeweils im Winkel von 45° zu den Seitenteilen angeordnet sind und einen im Querschnitt achteckigen Mantel bilden.

Die Seitenteile sind jeweils in horizontaler Richtung dreiteilig ausgebildet, wobei jeweils einem Seitenteil ein Wandmittelteil und daran links- und rechtsseits ein leicht nach innen abgewinkelter Übergangsrandabschnitt zugeordnet ist.

Mindestens eines der Seitenteile ist vertikal gerichtet mindestens zweiteilig ausgebildet, das aus einem Oberteil und aus einem als Klappe dienenden Unterteil zur Entnahme von Kompost besteht.

Die zwischen den Seitenteilen jeweils vorhandenen Verbindungen sind vorzugsweise als Scharnierleisten mit einer vertikal korrespondierenden Reihenfolge von Scharnierteilen mit den jeweils darin befindlichen, nach oben wegziehbaren Scharnierstäben ausgebildet, die auch rohrartig sein können.

Zwischen je zwei vertikal benachbarten Scharnierteilen befindet sich eine nach innen gerichtet versetzte Schutzabwinklung, wobei sowohl die Scharnierteile als auch die Schutzabwinklung im Wechsel an dem zugehörigen Übergangsrandabschnitt angeformt sind.

Der Abstand zwischen den benachbarten Scharnierteilen entspricht der Höhe des Scharnierteils und zugleich der Länge der Schutzabwinklung.

Wenn die Seitenteile miteinander verbunden sind, bestehen eine vertikale Eingriffskorrespondenz zwischen den Scharnierteilen sowie eine quergerichtete Schwenkkorrespondenz zwischen den Scharnierteilen und den sich gegenüberliegenden Schutzabwinklungen.

Die Scharnierteile können jeweils aus einer nach außen insbesondere halbhohlzylindrisch geformten Halblagerschale und aus einer in deren mittigem Bereich weitergeführten, eine geringere Höhe aufweisenden, das Stabloch umschließenden halbhohlzylindrischen Halblagerschale bestehen.

Im zusammengefügten, kontaktierten Schwenkeingriffszustand der Scharnierteile, wobei durch die Stablöcher ein Scharnierstab bzw. ein Verbindungsrohr geführt ist, sind die Seitenteile im Verbund mit den anderen Seitenteilen verschwenkbar ausgerichtet.

Die Seitenteile können Belüftungsöffnungen haben.

Die Seitenteile können zu ihrer Stabilitätsverbesserung eine äußere Verrippung und/oder eine innere Verrippung aufweisen.

Die beiden Verrippungen sind vorzugsweise verschiedenartig, insbesondere als eine zentral strahlenförmige Form (polarkoordinatendefiniert) und/oder als eine rechteckige Form (x-y-koordinatendefiniert) ausgebildet.

Wahlweise an zwei sich jeweils gegenüberliegenden Seitenteilen und dort innenwandig ist ein Bügel drehbar gelagert gehaltert angeordnet, der mit dem Deckel derart in Verbindung steht, daß der Deckel über dem Mantel erfindungsgemäß hochverschwenkbar ist.

Für die Drehachsenteile des Bügels an/in der Innenfläche der Seitenteile sind Auflager oder Führungsbohrungen od.dgl. vorgesehen, wobei vorzugsweise die Auflager größtenteils einen Hohlzylinder darstellen und etwa im oberen Bereich des Wandmittelteils der betreffenden Seitenteile angeformt bzw. eingebracht sind.

Der erfindungsgemäße Deckel zum verschwenkenden Schließen und Öffnen der Einfüllöffnung ist mit einer zentralen Flachdecke und mit die Flachdecke umgebenden, verschieden geformten und geneigten, trapezförmigen Segmenten ausgebildet, wobei deckelunterseitig eine deckelstabilisierende Verstegung vorhanden ist, die vorzugsweise derart ausgebildet ist, daß zwei in Schwenkrichtung des Deckels gerichtete, die gegenüberliegenden Borde jeweils berührenden Doppellängsstege und zwei Querstege vorhanden sind, die vorzugsweise in den Segmentbereichen mit den beiden Doppellängsstegen verbunden sind. Die Form der Segmente ist durch die Form der zentralen Flachdecke und den Querschnitt des Mantels vorgegeben.

Der Deckel besitzt randseitig an den Segmenten abgesetzte Deckelborde.

Der Deckel weist einen Bügel an der Deckelunterseite auf, der aus einem geraden Bügelmittelteil und aus einem linken und rechten, jeweils um einen Winkel von etwa 90° abgewinkelten Bügelarm besteht, an denen wiederum in einem Winkel von 90° nach außen abgewinkelte, zum Bügelmittelteil parallel gerichtete Drehachsteile sich befinden.

An einem der Deckelborde kann ein Griff zum Betätigen des Deckels vorgesehen sein, wobei der Griff vorzugsweise als ein Verschluß, insbesondere als Drucktastenöffner ausgebildet ist und wahlweise eine Arretierung des Deckels an den oberen Randbereichen der Seitenteile herbeiführt.

Der Deckel kann deckeloberseitig wie ein Schutzschild ausgebildet sein.

Die deckelunterseitigen Stege sind um eine definierte Distanz d von den Randkanten der Borde in die Deckelunterseite hinein gerichtet versetzt, so daß bei Abdeckung der Einfüllöffnung die Deckelunterseite mit den Stegen auf den oberen Randkanten der Seitenteile aufliegt und dabei die Borde über die oberen Randbereiche der Seitenteile um die definierte Distanz d stabilisierend halternd übergreifen.

Das Bügelmittelteil ist parallel zum seitlichen Quersteg gerichtet drehbar gelagert arretiert, wobei sich im dezentralen Kreuzungsbereich zwischen dem Quersteg und den beiden äußeren Längsstegen je ein senkrecht zur Flachdecke gerichteter Nutbolzen befindet, die jeweils eine längsgerichtete Lageraussparung, in die das gerade Bügelmittelteil eingebracht ist, und darin eine Auflage haben, auf der das Bügelmittelteil aufliegt. Vorzugsweise liegt dabei das Bügelmittelteil am Quersteg an.

In den beiden inneren Längsstegen sind im Bereich des Querstegs je ein Freischnitt vorgesehen, in denen das Bügelmittelteil am Quersteg geführt gehaltert ist.

Die beiden äußeren Längsstege und der Quersteg kreuzen sich, wobei im jeweiligen Kreuzungsbereich die Nutbolzen mit ihren beiden durch die nutartige Lageraussparung entstehenden zylinderkalottenartigen Bolzenteilen eingebracht, vorzugsweise eingeklebt oder eingeschweißt sind.

Mit je einer topfartigen Befestigungshülse kann ein Verschluß der Nutbolzen herbeigeführt werden. Somit ist eine stabile Halterung des Bügelmittelstegs parallel zum Quersteg erreichbar.

Der Deckel ist insbesondere durch die außermittige Anordnung der Bügelmittelteils an seiner Deckelunterseite hochverschwenkbar über der Einfüllöffnung und ist dabei von einem die Einfüllöffung freigebenden, etwa vertikalen Hängezustand hinter einem der Seitenteile zu dem etwa waagerechten, die Einfüllöffnung schließenden Abdeckzustand auf den oberen Randbereichen der Seitenteile bewegbar.

Der erfindungsgemäße, im wesentlichen aus den Seitenteilen und dem Deckel bestehende Thermokomposter ist vorzugsweise aus Kunststoff und stellt ein wärmeisoliertes Kompostsilo dar.

Die separaten Seitenteile und der zugehörige Deckel lassen sich einfach transportieren und schnell zusammenbauen.

Der Bügel ist vorzugsweise elastisch ausgebildet und läßt sich leicht in die Auflager bzw. Führungsbohrungen in den Wandmittelteilen der betreffenden Seitenteile einstecken. Der Deckel mit dem Bügel ist erfindungsgemäß somit einfach montierbar. Mit dem vorhandenen Bügel an der Deckelunterseite ist eine Deckelarretierung im Hängezustand erreichbar.

Durch den in jedem Eckbereich vorhandenen lösbaren Schwenkeingriff ist eine Kompostentnahme je nach Platz und Bedarf auch an allen Seiten möglich, indem zumindest eines der betreffenden Scharnierstäbe nach oben gezogen und die Verschwenkbarkeit eines Seitenteils genutzt wird.

Die Erfindung wird anhand eines Ausführungsbeispiels mittels mehrerer Zeichnungen näher erläutert.

Es zeigen:
- Fig. 1: eine schematische perspektivische Darstellung eines geschlossenen erfindungsgemäßen Thermokomposters,
- Fig. 2: eine perspektivische Darstellung des geöffneten Thermokomposters nach Fig. 1,
- Fig. 3: einen vergrößerten Ausschnitt des Auflagers für einen Bügel an einem Seitenteil mit eingreifendem Bügeldrehachsteil im Bereich des Rechtecks I in Fig. 2,
- Fig. 4: eine perspektivische Darstellung eines Teils einer Scharnierleiste an der Klappe zur Entnahme von Kompost,
- Fig. 5: eine perspektivische Darstellung der Scharnierteile und des nach oben gezogenen Scharnierstabes längs einer Scharnierleiste,
- Fig. 6: eine perspektivische Darstellung der Deckelunterseite,
- Fig. 7: eine perspektivische Darstellung der Aufnahme des Bügels meinen längsgenuteten Bolzen an der Deckelunterseite im Bereich des Rechtecks II in Fig. 6 und
- Fig. 8: eine perspektivische Darstellung der Halterung des Bügels in dem mit einer Befestigungshülse verschlossenen längsgenuteten Bolzen im Bereich des Rechtecks II in den Fig. 6 und 7.

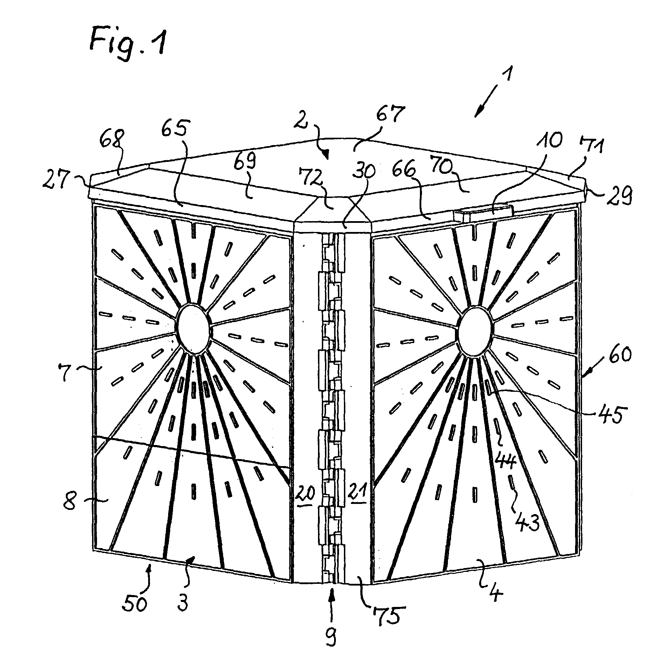

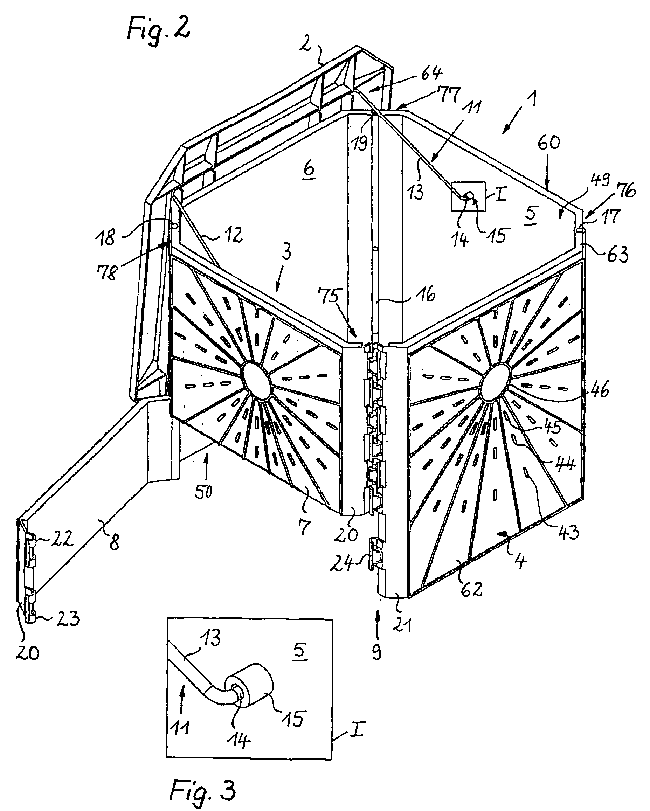

In den Figuren 1 bis 8 werden für gleiche Teile mit gleichen Funktionen die Bezugszeichen durchgängig beibehalten.

In den Fig. 1 und 2 ist ein Thermokomposter 1 für organische Abfälle, insbesondere für Küchen- und Gartenabfälle dargestellt, der einen über eine freie Grundfläche 50 angeordneten Mantel 60 aus vier Seitenteilen 3,4,5,6 aufweist, die über vertikalrandseitige Verbindungselemente 22,23,24 miteinander verbunden sind, wobei die Einfüllöffnung 49 des Mantels 60 mit einem Deckel 2 abdeckbar ist.

Erfindungsgemäß sind die Seitenteile 3,4,5,6 mit vertikal beidrandseitigen, nach innen gerichtete Übergangsrandabschnitten 20;21,63 sowie gleichartig ausgebildet, wobei an den Übergangsrandabschnitten 20,21 die Verbindungselemente 22,24,23 derart vertikal korrespondierend angeordnet sind, daß die Seitenteile 3,4,5,6 über lösbare Verbindungselementeeingriffe 22,24,23;16,17,18,19 schwenkbar miteinander verbunden sind.

Die jeweils Verbindungselemente aufweisenden Übergangsrandsabschnitte benachbarter Seitenteile 3-4,4-5,5-6,6-3 bilden im Verbund Stützseitenteile 75,76,77,78 aus, die bei vier gleichartigen Seitenteilen 3,4,5,6 jeweils im Winkel von 45° angeordnet sind.

An zwei sich gegenüberliegenden Seitenteilen 3,5;4,6 kann innenwandig ein Bügel 11 drehbar gelagert gehaltert sein, der mit dem Deckel 2 derart in Verbindung steht, daß der Deckel 2 hochverschwenkbar ist.

Der Deckel 2 ist wie der Mantel 60 vorzugsweise achteckig, mehrfach gegliedert und besteht aus einer zentralen Flachdecke 67 und acht an ihr angeformten leicht abgeschrägten, trapezförmigen Segmenten, von den die mit dem Bezugszeichen 68,69,70,71,72 ausgezeichneten in Fig. 1 sichtbar sind. In Fig. 1 sind nur fünf der acht Segmente sichtbar eingezeichnet.

Desweiteren besitzt der Deckel 2 randseitig abgesetzte Deckelborde, von denen 27,65,30,66,29 in Fig. 1 sichtbar gekennzeichnet sind. Damit können die Seitenteile 3,4,5,6 im abgedeckten Zustand eine zusätzliche Stabilität erhalten.

Die Seitenteile 3,4,5,6 sind jeweils in horizontaler Richtung dreiteilig ausgebildet, wobei stellvertretend für alle Seitenteile 3,4,5,6 z.B. dem Seitenteil 4 ein Wandmittelteil 62 und daran links- und rechtsseits ein leicht nach innen abgewinkelter Übergangsrandabschnitt 21,63 zugeordnet sind.

In Fig. 1 ist am Deckelbord 66 ein Griff 10 zum Betätigen des Deckels 2 vom Mantel 60 vorgesehen. Der Griff kann auch als ein Verschluß 10 ausgebildet sein, der vorzugsweise als Drucktastenöffner ausgebildet ist und eine Arretierung des Deckels 2 an den oberen Randbereichen der Seitenteile 3,4,5,6 herbeiführen kann.

Eines der Seitenteile, z.B. das Seitenteil 3 ist vertikal zweiteilig ausgebildet, wobei ein Oberteil 7 und ein Unterteil 8 als Klappe zur Entnahme von Kompost die Bestandteile sind. Die anderen Seitenteile 4,5,6 sind vorzugsweise in vertikaler Richtung einteilig ausgebildet. Aber auch die andereren Seitenteile 4,5,6 können je nach Platz und Bedarf aus ihrem Schwenkeingriff gelöst werden und zur Entnahme von Kompost vorgesehen sein.

In Fig. 2 sind die vier Seitenteile 3,4,5,6 über die zugeordneten Verbindungselemente, insbesondere über Scharnierleisten 9 mit einer vertikal korrespondierenden Reihenfolge von Scharnierteilen, z.B. 22,24,23 usw. mit den jeweils darin befindlichen Verbindungsrohren bzw. Scharnierstäben 16,17,18,19 jeweils miteinander verbunden.

Dort ist auch das Seitenteil 3 mit seitlich geschwenkter Klappe 8 dargestellt. Dabei ist der Scharnierstab 16 der Scharnierleiste 9 nach oben in vertikaler Richtung aus dem Schwenk- eingriff um die Höhe der drei Scharnierteile 22,24,23 nach oben gezogen. Damit lösen sich die Scharnierteile 22,24,23 aus deren Schwenkeingriff in Scharnierleiste 9 und die Klappe 8 ist um den Scharnierstab 18 verschwenkbar.

Die durch Umklappen der Klappe 8 entstehende seitliche Öffnung gibt den vorhandenen Kompost frei.

In Fig. 3 ist ein Auflager 15 an der Innenfläche des Seitenteils 5 vorgesehen. Das Auflager 15 stellt größtenteils einen Hohlzylinder dar und ist etwa achsenmittig im oberen Bereich des Wandmittelteils des Seitenteils 5 angeformt bzw. angebracht. In dem hohlzylindrischen Auflager 15 greift der elastische Bügel 11 mit seinem am rechten Bügelarm 13 befindlichen Drehachsteil 14 halternd ein. Mit dem linken (nicht eingezeichneten) Drehachsteil und dem rechten Drehachsteil 14 ist der Bügel 11 verschwenkbar gelagert. Durch die außermittige Anordnung der Bügelmittelteils 25 an der Deckelunterseite 64 ist der Deckel 2 hochverschwenkbar über der Einfüllöffnung 49 und kann dabei von einem die Einfüllöffung 49 freigebenden, etwa vertikalen Hängezustand hinter dem Seitenteil 6 zu dem etwa waagerechten, die Einfüllöffnung 49 schließenden Abdeckzustand auf den oberen Randbereichen der Seitenteile 3,4,5,6 bewegt werden.

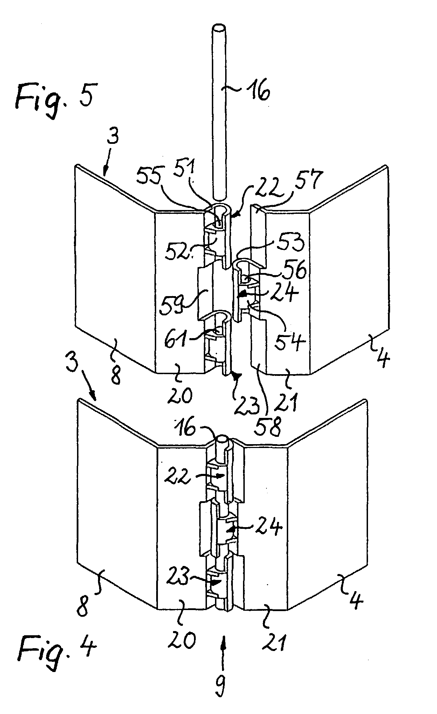

In den Fig. 4 und 5 ist ein Teil der Scharnierleiste 9 in zwei Zuständen dargestellt: Erstens ist in Fig. 4 die Scharnierleiste 9 in ihrem wirksamen verschwenkbaren Zustand und zweitens ist in Fig. 5 die Scharnierleiste 9 im gelösten Schwenkeingriff dargestellt, wobei auf beide Fig. 4,5 im folgenden gemeinsam Bezug genommen wird.

Die Klappe 8 besitzt die Scharnierteile 22 und 23. Zwischen den beiden Scharnierteilen 22,23 befindet sich eine Schutzabwinklung 59. Sowohl die Scharnierteile 22,23 als auch die Schutzabwinklung 59 sind an dem Übergangsrandabschnitt 20 angeordnet. Die Schutzabwinklung 59 ist um die Stärke des Seitenteils 8 nach innen einwärts versetzt. Das Seitenteil 4 besitzt das Scharnierteil 24. Das Scharnierteil 24 als auch die beiden vertikal benachbarten Schutzabwinklungen 57,58 sind an dem benachbarten Übergangsrandabschnitt 21 des Seitenteils 4 angeordnet. Der Abstand zwischen den Scharnierteilen 22,23 entspricht der Höhe des Scharnierteils 24 und zugleich der Länge der Schutzabwinklung 59. Es bestehen also eine vertikale Eingriffskorrespondenz zwischen den Scharnierteilen 22-24-23 sowie eine quergerichtete Schwenkkorrespondenz zwischen den Scharnierteilen 22,24,23 und den zugehörigen Schutzabwinklungen 57,59,58.

Stellvertretend für alle Scharnierteile 22,23,24 besteht im Klappenbereich 8 vorzugsweise das Scharnierteil 22 aus einer nach außen insbesondere halbhohlzylindrisch geformten Halblagerschale 51 und aus einer in deren mittigem Bereich weitergeführten, eine geringere Höhe aufweisenden, das Stabloch 55 umschließenden halbhohlzylindrischen Halblagerschale 52.

Ebenso besteht das Scharnierteil 24 aus einer Halblagerschale 53 und aus einer höhenverringerten Halblagerschale 54, die das Stabloch 56 festlegen.

Im zusammengefügten, kontaktierten Schwenkeingriffszustand der Scharnierteile 22,24,23, wobei durch die Stablöcher 55,56,61 der Scharnierstab 16 geführt ist, können die Seitenteile 8,4 im Verbund mit den anderen Seitenteilen 5,6 derart verschwenkbar ausgerichtet sein, daß der Deckel 2 mit seinen Borden 27,28,29,30 die Randbereiche der Seitenteile 3,4,5,6 überstülpend den Mantel 60 stabil haltern.

Die äußeren Halblagerschalen 51,53 sind ausgehend von den Übergangsrandabschnitt 21 nochmals einwärts im Ansatz abgewinkelt und dann nach auswärts geführt mit der weitergeführten breitenverminderten Halblagerschale an den Übergangsrandabschnitt 21 angebunden. Die lagerschalenausgebildeten Scharnierteile 22,24,23 sind also an den Übergangsrandabschnitten 20,21,63 angebracht und je nach Höhe der Seitenteile 3,4,5,6 entsprechend beabstandet ausgebildet.

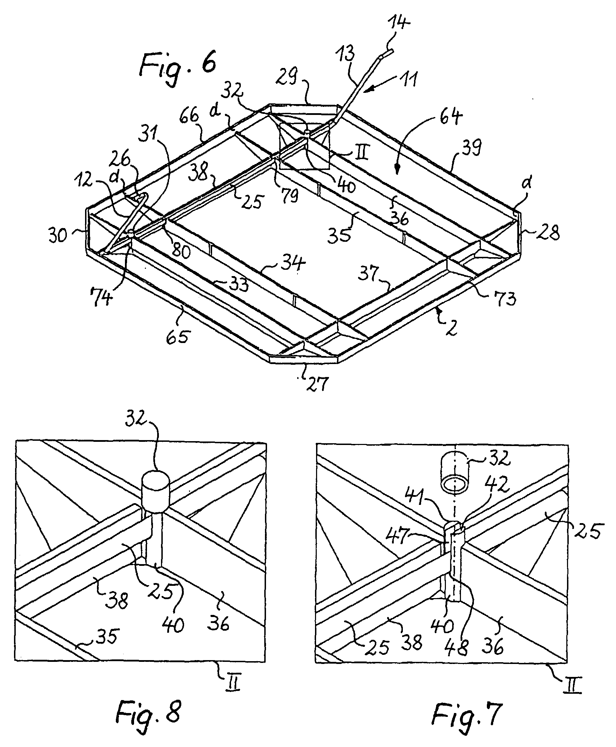

In den Fig. 6,7,8 ist die Deckelunterseite 64 in ihrem Aufbau dargestellt. Aufgrund der Deckelausbildung mit einer Flachdecke 67 und verschiedenen geformten und geneigten trapezförmigen Segmenten 68,69,70,71,72 u.a. wird die Stabilität des Deckels 2 innerhalb der Bordbereiche durch zwei in Schwenkrichtung des Deckels 2 gerichtete, die gegenüberliegenden Borde 66,73 jeweils berührenden Doppellängsstege 33,34 und 35,36 und zwei Querstege 37,38 erhöht. Die Querstege 37,38 sind in den Segmentbereichen des Deckels 2 mit den beiden Doppellängsstegen 33,34 und 35,36 über die gesamte Deckelunterseite 64 verlaufend verbunden. Deckeloberseitig hat der Deckel 2 das Aussehen eines Schutzschildes. Die deckelunterseitigen Stege 33 bis 38 sind um eine definierte Distanz d von den Randkanten der Borde 27 bis 30, 39,65,66,73 in die Deckelunterseite 64 hinein gerichtet versetzt, so daß bei Abdeckung der Einfüllöffnung 49 die Deckelunterseite 64 mit den Stegen 33 bis 38 auf den oberen Randkanten der Seitenteile 3,4,5,6 aufliegen und die Borde 27 bis 39,39,55,66,73 über die oberen Randbereiche der Seitenteile 3,4,5,6 um die definierte Distanz d stabilisierend halternd übergreifen.

Der Bügel 11 besteht aus einem Bügelmittelteil 25 und aus einem linken und rechten, jeweils um einen Winkel von etwa 90° abgewinkelte Bügelarme, an denen wiederum in einen Winkel von 90° nach außen abgewinkelte, zum Bügelmittelteil 25 parallel gerichtete Drehachsteile 14,26 sich befinden.

An einem der Stege, vorzugsweise am Quersteg 38 kann das Bügelmitttelteil 25 parallel gerichtet drehbar gelagert arretiert sein. Dazu befinden sich im dezentralen Kreuzungsbereich zwischen dem Quersteg 38 und den äußeren Längsstegen 33 und 36 je ein senkrecht zur Flachdecke 67 gerichteter Nutbolzen 74 und 40. Die Nutbolzen 74,40 besitzen jeweils eine Lageraussparung, z.B. mit Bezugszeichen 47 in Fig. 7,8, in die das Bügelmittelteil 25 eingebracht ist, und eine Auflage 48, auf der das Bügelmittelteil 25 aufliegt. In den inneren Längsstegen 34 und 35 sind im Bereich des Querstegs 38 je ein Freischnitt 79,80 vorgesehen, in denen das Bügelmittelteil 25 geführt gehaltert ist.

In den Fig. 7,8 kreuzen sich in detaillierter Darstellung der äußere Längssteg 36 und der Quersteg 38, wobei im Kreuzungsbereich der Nutbolzen 40 mit seinen beiden durch die nutartige Lageraussparung 47 entstehenden zylinderkalottenartigen Bolzenzungen 41,42 eingebracht, vorzugsweise eingeklebt oder eingeschweißt ist. Durch Überstülpen einer topfartigen Befestigungshülse 32 wird ein Verschluß der Bolzenzungen 41,42 der Nutbolzen 40,74 und somit eine Halterung des Bügelmittelstegs 25 längs des Querstegs 38 erreicht.

Durch die trapezförmige und abgewinkelte Segmentierung des Deckels 2 und der rechtwinklig zueinander gerichteten, deckelunterseitig angebrachten Längs- und Querstege 33 bis 38, vor allem im Abwinklungsbereich der Segmente wird eine außerordentliche Stabilität des Deckels 2 erreicht, so daß eine einfache Konstruktion des Bügel 11 ausreicht, den Deckel 2 am Griff oder Verschluß 10 hochverschwenkbar zu betätigen.

Die Erfindung eröffnet die Möglichkeit, daß durch den lösbaren Schwenkeingriff der Seitenteile 3,4,5,6 und der Klappe 8 zur Kompostentnahme an einem der Seitenteile 3,4,5,6 schwere Hebearbeit vermieden wird.

Durch die Belüftungsöffnungen 43,44,45 in den Seitenteilen 3,4,5,6 ist eine dauernde Belüftung des entstehenden Kompostes vorhanden. Innerhalb des Komposters 1 sind höhere Temperaturen vorhanden, um die organischen Abfälle schnell verrotten zu lassen. Durch eine äußere Verrippung 46 sowie durch eine in den Fig. nicht eingezeichnete innere Verrippung der Seitenteile 3,4,5,6 kann die Stabilität der Seitenteile 3,4,5,6 wesentlich erhöht werden. Eine Verbesserung der Wandungsstabilität der Seitenteile 3,4,5,6 kann vorzugsweise dadurch entstehen, wenn die beiden Verrippungen verschiedenartig ausgebildet sind, d.h. eine äußere, zentral strahlenförmige Form 46 (polarkoordinatendefiniert) und eine innere Verrippung mit einer rechtwinkligen Form (x-y-koordinatendefiniert) besitzen.

Durch die stabil ausgebildeten Seitenteile ist ein Mantel mit einem größeren Kompostiervolumen im Bereich zwischen 400 und 600 l erreichbar.

Da die verrippten Seitenteile und der verstegte Deckel aus Kunststoff bestehen, ist desweiteren die Ausbildung des Thermokomposters robust und langlebig ausgelegt. Durch die außerhalb des Hohlraum befindlichen Scharnierteile und Scharnierleisten kann eine störende Verschmutzung der Scharnierteile durch den Kompost vermieden sowie durch ein leichtes Lösen mittels des Ziehens eines Verbindungsrohres/Scharnierstabes können zwei Seitenteile voneinander getrennt bzw. zumindest ein Seitenteil verschwenkt werden. Desweiteren schirmen die Schutzabwinklungen die Scharnierteile vor Kompostverschmutzung ab und verhindern damit auch einen eckseitigen Austritt des Komposts.

## Patentansprüche

1. Thermokomposter für organische Abfälle, insbesondere für Küchen-und Gartenabfälle, aufweisend einen über eine freie Grundfläche angeordneten Mantel aus mindestens drei Seitenteilen, die über vertikalrandseitige Verbindungselemente miteinander verbunden sind, wobei die Einfüllöffnung des Mantels mit einem Deckel abdeckbar ist,
**dadurch gekennzeichnet,** daß die Seitenteile (3,4,5,6) mit vertikal beidrandseitigen, nach innen gerichteten Übergangsrandabschnitten (20;21,63) sowie gleichartig ausgebildet sind, wobei an den Übergangsrandabschnitten (20;21,63) die Verbindungselemente (22,24,23) derart vertikal korrespondierend angeordnet sind, daß die Seitenteile (3,4,5,6) über lösbare Verbindungselementeeingriffe (22,24,23;16,17,18,19) schwenkbar miteinander verbunden sind.

2. Thermokomposter nach Anspruch 1,
**dadurch gekennzeichnet,** daß die jeweils Verbindungselemente (22,24,23;16,17,18,19) aufweisenden Übergangsrandsabschnitte (20, 21) benachbarter Seitenteile (3,4,5,6) im Verbund Stützseitenteile (75,76,77,78) ausbilden, die bei vorzugsweise vier gleichartigen Seitenteilen (3,4,5,6) jeweils im Winkel von 45° angeordnet sind und einen im Querschnitt achteckigen Mantel (60) bilden.

3. Thermokomposter nach mindestens einem der vorhergehenden Ansprüche,
**dadurch gekennzeichnet,** daß die Seitenteile (3,4,5,6) jeweils in horizontaler Richtung dreiteilig ausgebildet sind, wobei jeweils einem Seitenteil (4) ein Wandmittelteil (62) und daran links- und rechtsseits ein leicht nach innen abgewinkelter Übergangsrandabschnitt (21, 63) zugeordnet sind.

4. Thermokomposter nach mindestens einem der vorhergehenden Ansprüche,
**dadurch gekennzeichnet,** daß mindestens eines der Seitenteile (3,4,5,6) vertikal mindestens zweiteilig ausgebildet ist, das aus einem Oberteil (7) und aus einem als Klappe dienenden Unterteil (8) zur Entnahme von Kompost besteht.

5. Thermokomposter nach mindestens einem der vorhergehenden Ansprüche,
**dadurch gekennzeichnet,** daß die den Seitenteilen (3,4,5,6) jeweils zugeordneten Verbindungen vorzugsweise als Scharnierleisten (9) mit einer vertikal korrespondierenden Reihenfolge von Scharnierteilen (22,24,23) mit den jeweils darin befindlichen, nach oben wegziehbaren Scharnierstäben (16,17,18,19) ausgebildet sind.

6. Thermokomposter nach mindestens einem der vorhergehenden Ansprüche,
**dadurch gekennzeichnet,** daß sich zwischen je zwei vertikal benachbarten Scharnierteilen (22,23) eine nach innen gerichtet versetzte Schutz- abwinklung (59) befindet, wobei sowohl die Scharnierteile (22,23) als auch die Schutzabwinklung (59) an dem zugehörigen Übergangsrandabschnitt (20) angeformt sind.

7. Thermokomposter nach mindestens einem der vorhergehenden Ansprüche,
**dadurch gekennzeichnet,** daß der Abstand zwischen den benachbarten Scharnierteilen (22,23) der Höhe des Scharnierteils (24) und zugleich der Länge der Schutzabwinklung (59) entspricht.

8. Thermokomposter nach mindestens einem der vorhergehenden Ansprüche,
**dadurch gekennzeichnet,** daß bei Verbund der Seitenteile (3,4,5,6) eine vertikale Eingriffskorrespondenz zwischen den Scharnierteilen (22-24-23) sowie eine quergerichtete Schwenkkorrespondenz zwischen den Scharnierteilen (22,24,23) und den sich gegenüberliegenden Schutzabwinklungen (57,59,58) bestehen.

9. Thermokomposter nach mindestens einem der vorhergehenden Ansprüche,
**dadurch gekennzeichnet,** daß die Scharnierteile (22,23,24) aus einer nach außen insbesondere halbhohlzylindrisch geformten Halblagerschale (51) und aus einer in deren mittigem Bereich weitergeführten, eine geringere Höhe aufweisenden, das Stabloch (55) umschließenden halbhohlzylindrischen Halblagerschale (52) bestehen.

10. Thermokomposter nach mindestens einem der vorhergehenden Ansprüche,
**dadurch gekennzeichnet,** daß im zusammengefügten, kontaktierten Schwenkeingriffszustand der Scharnierteile (22,24,23), wobei durch die Stab- löcher (55,56,61) das Verbindungsrohr (16) geführt ist, die Seitenteile (3,4) im Verbund mit den anderen Seitenteilen (5,6) verschwenkbar ausgerichtet sind.

11. Thermokomposter nach mindestens einem der vorhergehenden Ansprüche,
**dadurch gekennzeichnet,** daß die Seitenteile (3,4,5,6) Belüftungsöffnungen (43,44, 45) haben.

12. Thermokomposter nach mindestens einem der vorhergehenden Ansprüche,
**dadurch gekennzeichnet,** daß die Seitenteile (3,4,5,6) eine äußere Verrippung (46) und/oder eine innere Verrippung aufweisen.

13. Thermokomposter nach mindestens einem der vorhergehenden Ansprüche,
**dadurch gekennzeichnet,** daß die beiden Verrippungen vorzugsweise verschiedenartig, insbesondere als eine zentral strahlenförmige Form (46) (polarkoordinatendefiniert) und/oder als eine rechteckige Form (x-y-koordinatendefiniert) ausgebildet sind.

14. Thermokomposter nach mindestens einem der vorhergehenden Ansprüche,
**dadurch gekennzeichnet,** daß wahlweise an zwei sich jeweils gegenüberliegenden Seitenteilen (3,5;4,6) innenwandig ein Bügel (11) drehbar gelagert gehaltert ist, der mit dem Deckel (2) derart in Verbindung steht, daß der Deckel (2) hochverschwenkbar ist.

15. Thermokomposter nach mindestens einem der vorhergehenden Ansprüche,
**dadurch gekennzeichnet,** daß für die Drehachsenteile (14,26) des Bügels (11) an/in der Innenfläche des Seitenteile (3,5;4,6) Auflager oder Führungsbohrungen od.dgl. vorgesehen sind, wobei vorzugsweise die Auflager (15) größtenteils einen Hohlzylinder darstellen und etwa im oberen Bereich des Wandmittelteils der betreffenden Seitenteile (3,5;4,6) angeformt bzw. eingebracht sind.

16. Deckel zum verschwenkenden Schließen und Öffnen der Einfüllöffnung eines Thermokomposters,
**dadurch gekennzeichnet,** daß er mit einer zentralen Flachdecke (67) und mit umgebenden, geneigten und verschieden geformten, trapezförmigen Segmenten (68,69,70,71,72) ausgebildet ist, wobei deckelunterseitig zwei in seiner Schwenkrichtung gerichtete, die gegenüberliegenden Borde (66,73) jeweils berührenden Doppellängsstege (33,34;35,36) und zwei Querstege (37;38) vorhanden sind, die in den Segmentbereichen mit den beiden Doppellängsstegen (33,34;35,36) verbunden sind.

17. Deckel nach mindestens einem der vorhergehenden Ansprüche,
**dadurch gekennzeichnet,** daß er einen Bügel (11) an der Deckelunterseite (64) aufweist, der aus einem geraden Bügelmittelteil (25) und aus einem linken und rechten, jeweils um einen Winkel von etwa 90° abgewinkelten Bügelarm (12,13) besteht, an denen wiederum in einen Winkel von 90° nach außen abgewinkelte, zum Bügelmittelteil (25) parallel gerichtete Drehachsteile (14,26) sich befinden.

18. Deckel nach mindetens einem der vorhergehenden Ansprüche,
**dadurch gekennzeichnet,** daß der Deckel (2) randseitig an den geneigten Segmenten (68,69,70,71,72) abgesetzte Deckelborde (27,28,29,30,39, 65,66,73) besitzt.

19. Deckel nach mindestens einem der vorhergehenden Ansprüche,
**dadurch gekennzeichnet,** daß an einem der Deckelborde (66) ein Griff (10) zum Betätigen des Deckels (2) vorgesehen ist, wobei der Griff vorzugsweise als ein Verschluß (10), insbesondere als Drucktastenöffner ausgebildet ist und wahlweise eine Arretierung des Deckels (2) an den oberen Randbereichen der Seitenteile (3,4,5,6) herbeiführt.

20. Deckel nach mindestens einem der vorhergehenden Ansprüche,
**dadurch gekennzeichnet,** daß er deckeloberseitig wie ein Schutzschild ausgebildet ist.

21. Deckel nach mindestens einem der vorhergehenden Ansprüche,
**dadurch gekennzeichnet,** daß die deckelunterseitigen Stege (33 bis 38) um eine definierte Distanz (d) von den Randkanten der Borde (27 bis 30,39,65,66,73) in die Deckelunterseite (64) hinein gerichtet versetzt sind, so daß bei Abdeckung der Einfüllöffnung (49) die Deckelunterseite (64) mit ihren Stegen (33 bis 38) auf den oberen Randkanten der Seitenteile (3,4,5,6) aufliegt und die Borde (27 bis 30,39,55,66,73) über die oberen Randbereiche der Seitenteile (3,4,5,6) um die definierte Distanz (d) stabilisierend halternd übergreifen.

22. Deckel nach mindestens einem der vorhergehenden Ansprüche,
**dadurch gekennzeichnet,** daß das Bügelmittelteil (25) parallel zum seitlichen, außermittigen Quersteg (38) gerichtet drehbar gelagert arretiert ist, wobei sich im dezentralen Kreuzungsbereich zwischen dem Quersteg (38) und den äußeren Längsstegen (33,36) je ein senkrecht zur Flachdecke (67) gerichteter Nutbolzen (74,40) befinden, die jeweils eine längsgerichtete Lageraussparung (47), in die das gerade Bügelmittelteil (25) eingebracht ist, und darin eine Auflage (48) haben, auf der das Bügelmittelteil (25) aufliegt.

23. Deckel nach mindestens einem der vorhergehenden Ansprüche,
**dadurch gekennzeichnet,** daß in den beiden inneren Längsstegen (34,35) im Bereich des Querstegs (38) je ein Freischnitt (79,80) vorgesehen sind, in denen das Bügelmittelteil (25) geführt gehaltert ist.

24. Deckel nach mindestens einem der vorhergehenden Ansprüche,
**dadurch gekennzeichnet,** daß sich die äußeren Längsstege (36) und der Quersteg (38) kreuzen, wobei in den beiden Kreuzungsbereichen der Nutbolzen (40) mit seinen beiden durch die nutartige Lageraussparung (47) entstehenden zylinderkalottenartigen Bolzenzungen (41, 42) eingebracht, vorzugsweise eingeklebt oder eingeschweißt ist.

25. Deckel nach mindestens einem der vorhergehenden Ansprüche,
**dadurch gekennzeichnet,** daß an den Nutbolzen (40,74) je eine topfartige Befestigungshülse (31,32) einen Verschluß der Bolzenzungen (41,42) herbeiführt und somit eine Halterung des Bügelmittelstegs (25) parallel zum Quersteg (38) erreichbar ist.

26. Deckel nach mindestens einem der vorhergehenden Ansprüche,
**dadurch gekennzeichnet,** daß er durch die außermittige Anordnung der Bügelmittelteils (25) an seiner Deckelunterseite (64) hochverschwenkbar über der Einfüllöffnung (49) ist und dabei von einem die Einfüllöffung (49) freigebenden, etwa vertikalen Hängezustand hinter einem der Seitenteile (6) zu dem etwa waagerechten, die Einfüllöffnung (49) schließenden Abdeckzustand auf den oberen Randbereichen der Seitenteile (3,4,5,6) bewegbar ist.
